# EUROPEAN PATENT APPLICATION

(11) **EP 4 095 219 A1**
(43) Date of publication of application: **30.11.2022**
(21) Application number: 21176048.3
(22) Date of filing: 26.05.2021
(51) Int. Cl.: C10L 9/08

(54) **HYDROTHERMAL TREATMENT OF BIOMASS**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

The present invention concerns an improved process for a process for the treatment of biomass, comprising (a) subjecting biomass to hydrothermal treatment in a hydrothermal reactor by immersing the biomass in a treatment liquid, wherein an effluent drained from step (b) or (c) is used as treatment liquid; (b) draining the liquid from the reactor via a liquid outlet to obtain a liquor and simultaneously or subsequently introducing another washing liquid into the reactor, wherein the washing liquid is pre-heated to a temperature 30 °C below operational temperature of step (a) or higher before being introduced into the reactor, (c) draining the reactor to obtain washed hydrothermally treated biomass and an effluent, wherein at least one of step (a) and (b) is performed at a temperature in the range of 100 - 250 °C. The invention further concerns a solid fuel and a liquor obtained by the process according to the invention, as well as a hydrothermal treatment facility to operate the process according to the invention.

## Description

### Field of the invention

The present invention relates to a process for the treatment of biomass, especially fibrous biomass, to remove salts and other unwanted components, as well as the solid fuel obtained by said process.

### Background art

Torrefaction is a useful process for converting inexpensive low value biomass such as agricultural wastes and the like into high-grade fuels. In a torrefaction process, the biomass is heated to moderately high temperatures, typically 200 - 320 °C without added oxygen, resulting in removal of most of the residual water and a gentle breakdown of constituents of biomass producing a gas fraction, the so-called "tor-gas", comprising water vapour, carbon dioxide and small organic molecules, and a compactable solid product, which can be processed into a solid fuel, e.g. as a coal substitute.

As an example, WO 2005/056723 describes a torrefaction process, in which biomass is torrefied at between 200 and 320°C, and the gas produced by the torrefaction is cooled so as to condense impurities and combustible material. NL 1029909 describes a pressurised torrefaction process, wherein the water remains in the liquid state during the heat treatment. This hydrothermal treatment leads to torrefaction of biomass and liberation of salts, which are dissolved in water and can be removed by mechanical means. However, if the hydrothermal treatment is performed in a single step with dewatering afterwards, the temperature must be relatively high in order to create the desired fuel characteristics, e.g. 190 °C for grass or even 210 °C for reeds and straw. At this temperature, water-soluble phenols and other undesired by-products are formed from decomposition. The pressed-out effluent then contains components that are not digestible and can even be toxic. EP 2206688 describes a hydrothermal process for carbonising biomass at between 190 and 230 °C and between 10 and 30 bar for 1-5 hours, followed by separation of the resulting solid and liquid by wet oxidation treatment of the liquid. The purpose of the heat treatment is chemical conversion of the biomass.

The applicant has developed a hydrothermal torrefaction treatment, termed Torwash^{™}, as described in WO 2013/162355. With Torwash, the torrefaction of biomass with high salt content has become available, since salts are effectively removed during Torwash. Such biomass could not effectively be treated with conventional torrefaction methods. Torwash as described by WO 2013/162355 requires the use of fresh water in the first step (pre-wash below 160 °C), as well as in the subsequent step (hydrothermal treatment above 160 °C). WO 2019/059768 describes a method comprising a torrefaction step wherein a mixture of biomass and POME is heated at a temperature of 100-400 °C and elevated pressure, followed by a post-washing step. The pressure during torrefaction is said to typically lie in the range of 4-50 bar. The washing step may be performed at a temperature in the range of 10-50 °C, with the pressure in the range of 1-1.5 bar. Washing may be conducted in counter-current mode to minimize the amount of water needed.

WO 2015/091861 describes a method to reduce unwanted inorganic components in cellulosic biomass by washing the biomass using water at a temperature of 120-150 °C at a pressure high enough to maintain water in the liquid phase. The solid cellulosic biomass material can be washed in a counter-current manner. The cellulosic biomass material may contain lignin. It is further described that the washed solid biomass may subsequently be dried and/or torrefied. WO 2014/122163 describes the problems of heat recovery in thermal biomass treatments and proposes to use a pressure drop to generate steam, which is then used to release its heat to a heat exchanger by condensation. In particular, WO 2014/122163 describes a method for preparing fuel from biomass by subjecting the biomass to a heat treatment at a temperature of 150-300 °C in a reactor pressurized with steam and air, wherein the pressure at the end of the heat-treatment is released. At least a portion of the pressure in the reactor is released abruptly, thereby expelling the reaction from the reactor to a pressure release tank. The gas then flows to the heat exchanger wherein gases are condensed and release their heat.

### Summary of the invention

The inventors surprisingly found that the hydrothermal treatment (Torwash process) could efficiently be combined with a post-wash step under the same conditions, i.e. at high temperatures and under pressure, thereby improving the washing efficiency of biomass. High removal rates of potassium and chloride can be achieved, and the obtained solids meet the requirements of fuel pellets in terms of ash content and heat value/caloric value. In addition, lignin could largely be removed from the biomass. Another advantage is that the washing effluent of the post-wash step can be recycled and re-used in the hydrothermal treatment step, and the effluent of the hydrothermal treatment step is removed at high temperature, so that its latent heat can be transferred in a heat exchanger to incoming liquid water, which makes the overall process more energy efficient.

Thus, the invention concerns a process for the treatment of biomass, comprising:
(a) subjecting biomass to hydrothermal treatment in a hydrothermal reactor by immersing the biomass in a treatment liquid, wherein an effluent drained from step (b) or (c) is used as treatment liquid;
(b) draining the liquid from the reactor via a liquid outlet to obtain a liquor and simultaneously or subsequently introducing another washing liquid into the reactor, wherein the washing liquid is pre-heated to the a temperature 30 °C below operational temperature of step (a) or higher before being introduced into the reactor,
(c) draining the reactor to obtain washed hydrothermally treated biomass and an effluent, wherein at least one of step (a) and (b) is performed at a temperature in the range of 100 - 250 °C.

The invention further pertains to a system to carry out the process according to the invention and solid fuels obtainable by the process according to the invention. Herein the solid fuels correspond to the washed hydrothermally treated biomass or are obtainable therefrom.

### List of preferred embodiments

1. A process for the treatment of biomass, comprising:
   (a) subjecting biomass to hydrothermal treatment in a hydrothermal reactor by immersing the biomass in a treatment liquid, wherein an effluent drained from step (b) or (c) is used as treatment liquid;
   (b) draining the liquid from the reactorvia a liquid outlet to obtain a liquor and simultaneously or subsequently introducing anotherwashing liquid into the reactor, wherein the washing liquid is pre-heated to a temperature 30 °C below operational temperature of step (a) or higher before being introduced into the reactor,
   (c) draining the reactor to obtain washed hydrothermally treated biomass and an effluent, wherein at least one of step (a) and (b) is performed at a temperature in the range of 100 - 250 °C.
2. The process according to embodiment 1, wherein step (b) involves:
   (b1) a first washing step wherein a first washing liquid is introduced into the reactor and the reactor is simultaneously and/or subsequently drained via a liquid outlet to obtain a liquor;
   (b2) optionally one or more intermediate washing step wherein a further washing liquid is introduced into the reactor and simultaneously draining the reactor via a liquid outlet to obtain an intermediate washing effluent;
   (b3) a final washing step wherein a final washing liquid is introduced into the reactor and the reactor is simultaneously drained via a liquid outlet to obtain a final washing effluent, wherein each washing liquid is pre-heated to the operational temperature of step (a) before being introduced into the reactor.
3. The process according to embodiment 2, wherein step (b2) involves 0 - 10 intermediate washing steps.
4. The process according to embodiment 2 or 3, which is performed in a hydrothermal treatment plant wherein at least two hydrothermal reactors perform the process in parallel, and wherein one or more of the intermediate washing effluents and final washing effluent from a first reactor is used as washing liquid in the first washing step or one or more of the intermediate washing steps in a second reactor, preferably wherein the temperature of the washing effluent is kept above 150 °C.
5. The process according to any one of the preceding embodiments, wherein the effluent drained from step (c) is used as treatment liquid in step (a).
6. The process according to any one of the preceding embodiments, wherein the washed biomass after drainage in step (c) is subjected to a steam explosion or controlled pressure release by lowering the pressure.
7. The process according to any one of the previous embodiments, wherein temperature of the effluent from step (c), typically in the form of steam, is used to heat the treatment liquid prior to step (a), preferably in a heat exchanger or by direct injection into the treatment liquid.
8. The process according to any one of the preceding embodiments, wherein the liquid to solid (L/S) ratio during the treatment of step (a) is in the range of 2 - 25, preferably in the range of 15 - 20.
9. The process according to any one of the preceding embodiments, wherein the biomass comprises fibrous lignocellulosic biomass of woody or herbaceous origin, namely wood including hardwood, softwood and wood obtained from pruning or chopping trees, straw, bamboo, or mixtures thereof, preferably wherein the biomass is fibrous biomass selected from sugarcane harvest residues (SHR), empty fruit bunches (EFB), discarded fresh fruit bunches (FFB), mesocarp, coconut fibres and fruit peels.
10. The process according the any one of the preceding embodiments, further comprising processing of the washed hydrothermally treated biomass into solid fuel pellets, preferably by one or more dewatering, drying and pelletizing.
11. The process according to any one of the preceding embodiments, wherein the liquor obtained in step (a) is used to preheat the washing liquid in step (b), preferably in step (b3), preferably in a heat exchanger, and/or wherein the liquor obtained in step (a) is kept at a temperature above 140 °C until it is cooled to below 100 °C in a lignin collection vessel, wherein lignin precipitates from the liquor.
12. Solid biomass-derived fuel obtainable by the process according to any one of the preceding embodiments.
13. Liquor obtainable by the process according to any one of the preceding embodiments, in particular by step (b1).
14. A facility for the hydrothermal treatment of biomass, comprising a reactor sequence of at least two hydrothermal reactors, (a) a first hydrothermal reactor and (b) a second hydrothermal reactor, wherein all reactors operate in parallel and comprise:
   (1) a reactor interior for containing an aqueous biomass mixture;
   (2) an inlet for receiving the biomass;
   (3) an inlet for receiving the treatment liquid or washing liquid;
   (4) heating means, which preferably take the form of an inlet for receiving steam;
   (5) an outlet for discharging liquor or effluent;
   (6) an outlet for discharging torrefied biomass;
   (7) an outlet for discharging a process gas,
      wherein outlet (5) of reactor (a) is in fluid connection with inlet (3) of reactor (b), and wherein outlet (5) of the last reactor of the sequence is in fluid connection with inlet (3) of reactor (a).
15. The facility according to embodiment 14, wherein outlet (5) is equipped with a valve capable of closing the fluid connection with inlet (3) and opening a fluid connection with a lignin collection vessel.

### Detailed description

The invention concerns a process for the treatment of biomass and a system (reactor) for performing the treatment therein. All defined herein for the process according to the invention equally applies to the system according to the invention and vice versa.

### The process

In a first aspect, the invention concerns a process for the treatment of biomass, comprising:
(a) subjecting biomass to hydrothermal treatment in a hydrothermal reactor by immersing the biomass in a treatment liquid, wherein an effluent drained from step (b) or (c) is used as treatment liquid;
(b) draining the liquid from the reactor via a liquid outlet to obtain a liquor and simultaneously or subsequently introducing another washing liquid into the reactor, wherein the washing liquid is pre-heated to the a temperature 10 °C below operational temperature of step (a) or higher before being introduced into the reactor,
(c) draining the reactor to obtain washed hydrothermally treated biomass and an effluent,
wherein at least one of step (a) and (b) is performed at a temperature in the range of 100 - 250 °C.

In one embodiment, step (b) is directly performed after step (a), without substantial alteration of the torrefied biomass. In one embodiment, step (c) is directly performed after step (b). The process can also be worded as being for the production of solid fuel, wherein the solid fuel is obtained as the washed hydrothermally treated biomass material in step (c), optionally after further washing and processing steps as defined below. The inventors have found that the solid fuels obtained in the process according to the invention can be more readily dehydrated by mechanical pressing and more readily pelletized then the products of conventional dry torrefaction processes. Also, the solid fuels obtained by the process according to the invention contain less soluble or leachable salts, which improves their suitability as solid fuel, causing less fouling of the furnace.

The invention further concerns a solid fuel, obtainable by the process according to the invention. The solid fuel according to the invention is preferably characterized by a total ash content comprising elevated levels of silicates and reduced levels of halogenides and alkali metals, compared to the untreated biomass. The solid fuel according to the invention is typically in the form of pellets.

The invention further concerns an extract obtainable by the process according to the invention, in particular the effluent of step (b1). The extract obtained from leaching with water at elevated temperature, according to the invention, comprises organic and inorganic components that are hardly soluble at temperatures below 100 °C, but readily soluble in water at the process temperature defined below, preferably in the range of 150 - 250 °C. This extract is, in the context of the present invention, also referred to as liquor. The extract according to the invention has an improved suitability for digestion and generation valuable compounds.

Although any type of biomass feedstock could be used, in one embodiment the process is performed with biomass which benefits from Torwash over regular (dry) torrefaction, including biomass having a high salt content, such as a high potassium and/or chloride content. The benefits are largest if the biomass is fibrous in nature and requires substantial amounts of water for the removal of dissolution of salts. Thus, in a preferred embodiment, the biomass is fibrous lignocellulosic biomass of woody or herbaceous origin. This biomass may be wood, including hardwood, softwood and wood obtained from pruning or chopping trees. The biomass of herbaceous origin may include grass, reeds, hay, straw, leaves, bamboo, sugar beet heads, moss, clippings, garden waste, residues from food industry (e.g. sugarcane harvest residues (SHR), empty fruit bunches (EFB), discarded fresh fruit bunches (FFB), coconut fibres, mesocarp, olive kernels, rice husk). The process is particularly advantageous for fibrous biomass, as post-washing of torrefied biomass provides most optimal results. In an especially preferred embodiment, the biomass is fibrous biomass, preferably selected from wood including hardwood and softwood, wood obtained from pruning or chopping trees, straw, bamboo, or mixtures thereof, preferably wherein the biomass is selected from SHR, EFB, FFB, mesocarp, coconut fibres, bamboo, wood including hardwood and softwood, wood obtained from pruning or chopping trees, most preferably wherein the biomass is selected from SHR, EFB, FFB, mesocarp, coconut fibres and bamboo.

Prior to being subjected to step (a), the biomass may be pre-treated. Such pre-treatment may comprise removal of non-biomass material such as sand, stones, plastic etc., by sieving or otherwise, shredding, cutting, chopping and/or screening and the like. The pre-treatment may comprise a mechanical pre-treatment, which may involve breaking the structure of the biomass into small particles of e.g. 0.1-10 cm in diameter. The mechanical pre-treatment preferably comprises chipping, milling, grinding, or extrusion, e.g. using choppers, stone mills, ball mills, extruders, or the like.

In another embodiment, the process according to the invention is ideally suited to replace a steam-distillation process, wherein the biomass is stripped of volatile components, in particular of water-insoluble ones, such as oils, terpenes or fragrances. This is particularly advantageous in the production of D-limonene from orange peels, where the steam-stripped biomass is considered a waste stream. Subjecting orange peels to the process according to the invention enables the production of D-limonene and at the same time converts the treated biomass into a valuable product. Also the heat and pressure of the steam-stripped biomass can be utilized in step (a) of the process according to the invention, which further improves the energy efficiency of the overall process.

### Step (a)

Step (a) of the process according to the invention is the regular hydrothermal treatment step as known to the skilled person from e.g. WO 2013/162355. This hydrothermal treatment provides already for a large part the desired salt removal. Ash, in particular halogenides and alkali metals need to be removed from solid fuels in order to avoid issues with corrosion, slagging, fouling and agglomeration. Of the relevant ions, potassium and chloride are most abundant in biomass, therefore the salts in biomass are well represented by but not limited to K and Cl.

During step (a), a solid phase (biomass) and a treatment liquid are contacted, typically by immersing the biomass in the treatment liquid which is heated to a temperature in the range of 100 - 250 °C prior to being introduced into the reactor. Step (a) may also be referred to as "torrefying" or "wet torrefying". The mixture of biomass and treatment liquid is treated at elevated temperature in order to obtain hydrothermally treated material. The mixture may for example take the form of a suspension or solids submerged in the liquid. Best results have been obtained with submerging the biomass in the hot treatment liquid, as that allows short treatment times at the lowest amount of liquid needed per amount of solid. The solid phase is formed by the biomass and includes any adherent liquid.

The treatment liquid comprises the drained effluent from step (b) or (c), and is pre-heated before adding to the biomass. Such pre-heating advantageously takes the form of keeping the effluent at the temperature, and preferably pressure, it has when drained from the reactor. Any additional heat can be introduced in the reactor, using steam that may be released downstream in the process or any other source of heat. In one embodiment, the treatment liquid comprises at least 50 wt% of the drained effluent from step (b) or (c), preferably at least 80 wt%, more preferably at least 90 wt% or even at least 95 wt% of the drained effluent from step (b) or (c). In one embodiment, the treatment liquid is (i.e. consists of) the drained effluent from step (b) or (c). In case step (b) involves more than one washing step, as defined further below, it is preferred that the treatment liquid comprises an effluent from step (b), not being the first washing step of step (b). In case step (b) involves only one washing step, it is preferred that the treatment liquid comprises an effluent from step (c). In another embodiment, the treatment liquid comprises a combination of various effluents obtained from the process. The treatment liquid could also be combined with another source of water, such as tap water, fresh water, rainwater or other aqueous liquids.

The inventors surprisingly found that using the drained effluent from step (b) or (c) as treatment liquid in the hydrothermal treatment step (step (a)) did not interfere with the removal of ions, such as potassium and chloride, and organic compounds from the biomass. Even though these ions are contained in the effluent in lowered amounts, the obtained solid fuels are depleted in these ions, compared to the incoming biomass, just as they would be if fresh water would be used. In fact, any remaining K and Cl-containing species in the solid obtained in step (a) are contained in the liquid remaining within the solid matrix after draining, and is thus easily removed in step (b). As such, corrosion of the furnace when burning the solid fuels obtained by the process according to the present invention and similar issues are not at hand.

The liquid to solid (L/S) ratio in the mixture that is subjected to step (a) is preferably in the range of 2 - 25, more preferably in the range of 15 - 20. These L/S ratios takes into account the solids present in the liquid phase (they are classified as solids) as well as the liquid in the solid phase (classified as liquids). Excellent results have been obtained with L/S ratios in the range of 15 - 20, preferably where the solids are sufficiently submerged. With these high L/S ratios, salts could effectively be removed from the biomass. Complete submersion of the biomass in the treatment liquid is not absolutely necessary, although it is preferred. Typically, biomass that would stick out of the treatment liquid at the beginning of step (a) would swiftly collapse and submerge.

At least one of step (a) and (b) is performed at a temperature in the range of 100 - 250 °C, also referred to as the "torrefaction temperature", preferably at least step (b) is performed at the torrefaction temperature, most preferably both step (a) and (b) are performed within that temperature range. In one embodiment, the temperature during step (a) and all washing steps (b) is kept substantially constant, identified herein as the "torrefaction temperature". As such, the process according to this embodiment benefits from not having to increase or decrease the temperature of the liquid, which is favourable in terms of energy consumption. In an alternative embodiment, step (a) is performed at a temperature below the torrefaction temperature and step (b) is performed at the torrefaction temperature. The process according to this embodiment benefits from the digestibility of the drained liquor from (the first) step (b) is improved compared to the drained liquor when step (a) is performed at the torrefaction temperature.

To ensure that the biomass is sufficiently treated, at least one of steps (a) and (b) is performed at the torrefying temperature in the range of 100 - 250 °C, preferably in the range of 120 - 230 °C. Preferably, both steps (a) and (b) are performed within this temperature range. At this temperature, the torrefaction takes place. During the hydrothermal treatment or wet torrefaction at this temperature, various reactions take place within the biomass, such as opening of the fibrous structure of the biomass and the hydrolysis of hemicellulose. In case step (a) is performed at relatively low temperature, such as below 160 °C, and step (b) at higher temperature, such as above 175 °C, the degradation compounds of the hemicellulose hydrolysis are largely removed during the draining at the beginning of step (b), before the hotter washing liquid is introduced. As such, these degradation compounds are removed from the reactor without having experienced the elevated temperature of step (b), which is beneficial for their digestibility. As such, also the liquor of the hydrothermal treatment is further improved in terms of suitability for digestion and generation valuable compounds. The inventors found that at such a relatively low temperature, the fibrous structure of the biomass is already sufficiently opened to allow extraction of organic compounds. At the more elevated temperature of step (b), the torrefaction reaction would take further place and the structure of the biomass becomes more brittle and more easily compressible, which is desirable for the manufacture of solid fuels from the treated biomass. The inventors found that in this particular embodiment the optimal temperature for torrefying in step (a) in the context of the present invention is in the range of 130 - 160 °C, most preferably at about 140 °C. Such a temperature provides sufficient opening of the biomass structure to remove salts by washing and at the same time keeps sufficient structural integrity to maintain a solid structure, from which water is removed to obtain a solid fuel. Within this embodiment, it is preferred that step (b) is performed at a temperature of 175 - 250 °C, most preferably at about 190 °C.

In case step (b) is performed at a torrefying temperature as defined above, then step (a) may be performed at a temperature in the range of ambient (say 15 °C) to 160 °C. As such, step (a) acts as a pre-washing step wherein salts and other extractives are washed away prior to the actual torrefaction.

In an especially preferred embodiment, step (a) is performed at a torrefying temperature in the range of 100 - 250 °C, preferably in the range of 120 - 230 °C. The temperature at which step (a) is performed is also referred to as the operational temperature. The hydrothermal reactor preferably comprises heating means for heating the reactor to the operational temperature. Preferably, steam is used to heat the reactor to the operational temperature. This may be done by introducing steam in the reactor, which will increase the temperature and pressure of the reactor. Alternatively, the treatment liquid may be heated by the steam prior to introduction into the reactor, such as in a heat exchanger, or the steam may be injected into the treatment liquid prior to introduction into the reactor. The introduced steam may condense in the reactor, in view of the increasing pressure, and may become part of the treatment liquid. Steam may also be used to preheat the treatment liquid prior to it being introduced in the reactor, such that the reactor is heated by the introduction of hot treatment liquid. The most energy efficient use of steam is to directly inject the steam in the reactor, which is thus the preferred way of heating the reactor. In a preferred embodiment, the steam originates from a process off gas, preferably from the present process. For example, steam is generated in step (c), when the pressure is released. Advantageously, this steam is collected and used to heat the reactor in step (a). This may be a second reactor operating in parallel or the same reactor when a new batch of biomass is introduced in the reactor for another cycle of the process.

Steps (a) and (b) are typically performed at elevated pressure in order to keep the liquid phase liquid. A typical pressure is slightly above the steam pressure of the operational temperature, and typically is in the range of 4 - 50 bar, preferably 12 - 25 bar. The duration of steps (a) and (b) together is typically in the range of 5 min - 5 h, preferably 10 min - 2 h, more preferably 15 min - 1 h.

Step (a) provides a liquid phase, referred to as liquor or torrefaction liquor, and a solid phase, referred to as treated (torrefied) biomass or material. At the end of step (a), both these phases are still contained in the reactor. The treated biomass is kept in the reactor and subjected to step (b) (in case of multiple steps (b), this is to step (b1)), while the liquor is discharged from the reactor and discarded as waste or used as deemed fit. The liquor obtained in the process according to the invention is characterized in a relative high amount of lignin. Since some lignin is well soluble in hot water, but readily precipitates when the water cools, it is preferred that the liquor is led to a lignin collection vessel and kept at high temperature until it arrives there. Preferably, the liquor is kept at at least 100 °C, more preferably at at least 140 °C or even at at least 150 °C, most preferably at the torrefaction temperature, until it is released in a lignin collection vessel. As such, lignin is not precipitated prior to the lignin collection vessel, which avoids fouling of the system with precipitated lignin. The lignin is then isolated from the liquor in a controlled way and enables further application thereof. The liquor, optionally after precipitation of the lignin, may be used as deemed fit. A possible application of the liquor is the production of biogas via digestion, typically anaerobic digestion. The thus obtained biogas can advantageously be used to heat the reactor, e.g. by generation of steam. As such, a further increase in cost efficacy and renewability of the entire process is achieved. Alternatively, the liquor may be used to obtain bio-based chemicals and products. The present invention also concerns the liquor obtained in step (b), preferably in step (b1), which is especially suitable for digestion and generation valuable compounds.

Step (a) typically also affords a gaseous product, which contains degradation products of the organic matter present in the biomass and possible the treatment liquid. The gaseous product mostly contains H₂O, and further often CO₂, and possibly one or more of CO, H₂, methane, methanol, formic acid and acetic acid. This gaseous product can be used as deemed fit, e.g. in the production of biogas (bio-SNG). In one embodiment, the gaseous product of step (a) is subjected to condensation of at least the water present therein. The condensation product is a salt-free liquid that can be used as a source of water in step (a) of the process according to the invention or the steam generation.

### Step (b)

At the end of step (a), the reactor containing the biomass that is being treated is drained in step (b). Draining refers to the removal of the liquid phase (liquor) from the reactor, which may for example be done by opening a valve at the bottom, by decanting the reactor or by removing liquid through a dip tube. During step (b), also a washing liquid is introduced into the reactor. The introduction of the washing liquid may be done simultaneously with the draining, such the washing liquid replaces the liquor obtained in step (a). Such a displacement process for emptying and filling a reactor is known in the art. Alternatively, the reactor may be drained first, and optionally after a short time period, typically 5 - 15 min, of agitation (e.g. stirring or shaking of the reactor content), and subsequently filled with the washing liquid. The washing liquid is typically introduced via the same inlet as the treatment liquid for step (a).

In step (b), the torrefied solid product originating from step (a) is washed, also referred to as "post-washing". In case step (b) is performed at the torrefaction temperature also some torrefaction occurs during step (b). This is especially true in case step (a) is performed at relatively low temperature, e.g. below 160 °C, and step (b) at the torrefaction temperature. In such instances, it is especially preferred that step (b) involves at least two washing steps, wherein at least the first washing step should be performed at the torrefaction temperature. In conventional torrefaction and Torwash processes, the biomass is washed prior to be subjected to the torrefaction step (i.e. "pre-washing"), to remove as much as possible ions and other extractives from the biomass. The presence of ions such as chlorine and potassium in the final solid fuel causes undesirable slagging, fouling, agglomeration and corrosion of the furnace. To avoid such issues, these ions need to be removed from the biomass. However, as the treatment liquid may include salts such as chlorine, potassium and sodium, removing ions before step (a) was found to be less efficient. The inventors found that a post-washing step, wherein the treated biomass is washed at elevated temperatures, gave optimal results when a washing effluent was used as the treatment liquid in step (a) and fresh water in step (b), or in the case of multiple steps (b) in the last washing step of step (b). The inventors further found that a larger fraction of the undesired elements present in the biomass could be removed by a post-washing step, compared to a pre-washing step. Without being bound to a theory, it is believed that before the thermal treatment of step (a), part of CI, K and other undesired ions is bound to or embedded in the structural matrix of the biomass, and cannot be washed out, whereas thermal treatment in step (a) liberates these ions, such that substantially all CI and K dissolvable and can be washed out. However, post-washing may not be available for dry torrefied biomass, or biomass that has been subjected to Torwash, because the obtained solids may be brittle and break easily, such that post-washing may lead to breaking or pulverization of the torrefied biomass. As post-washing typically employs filters for retaining the solids and permeating the liquid, small pieces that break off the solids may pass these filters and contaminate the liquid stream or cause clogging of the filters. Notwithstanding these downsides of post-washing, the inventors have successfully performed a post-wash step on torrefied SHR, which because of its tough, sturdy nature did not lead to breaking of the torrefied material. Filtering of the washed solids does not lead to significant breaking of the solids, such that contamination of the liquid stream with tine fragments of solids and clogging of the filters is not observed. Furthermore, because of the high fibre content of SHR, even after Torwash the torrefied solids retain an open structure, such that the washing liquid has optimal contact with the solids and ions are effectively removed and at the same time the structure of the torrefied material is not significantly jeopardized, such that they can still be handled as regular torrefaction produced solid fuels. For that reason, it is preferred that the biomass subjected to step (a) of the process according to the invention is woody or fibrous biomass, as defined above.

Importantly, the washing liquid that is introduced in step (b) is pre-heated to a temperature of at least 30 °C below the operational torrefying temperature, preferably at least 10 °C below the operational torrefying temperature. Typically, step (a) is performed at a torrefying temperature in the range of 100 - 250 °C, such as 150 - 250 °C, preferably in the range of 120 - 230 °C, and the washing liquid introduced in step (b) has a temperature of at least 90 °C, preferably at least 110 °C, and 30 °C below the actual temperature step (a) is performed or higher. As such, the reactor remains at elevated temperature throughout the entire process and energy losses are minimized. In a preferred embodiment, the temperature of the washing liquid is at least the operational torrefying temperature, more preferably at least 10 °C above the operational torrefying temperature.

The pre-heating of the washing liquid can be done in any way known in the art. In an especially energy efficient embodiment of the process according to the invention, the washing liquid originates from the process itself, e.g. from the same process running in parallel in a separate reactor. This embodiment is described in more detail below.

Step (b) is performed at elevated temperature, preferably in the same temperature range as defined for step (a). As the skilled person will understand, the temperature during the entire step (b), especially when there are multiple washing steps as defined below, may fluctuate. The introduction of the washing liquid at elevated temperature ensures that the reactor, including the biomass therein, is kept at sufficiently high temperature that no significant drop in temperature is observed in the period between introduction of the washing liquid and draining thereof. As is common in the art, it is preferred that the hydrothermal reactor is thermally insulated to avoid heat loss from the interior of the reactor.

The washing of step (b) lasts for a duration, also referred to as the washing time that is defined from the completion of the introduction of the washing liquid to the start of the draining of the same liquid. Thus, when step (b) involves multiple washing steps, each step has a certain washing time. This washing time is preferably in the range of 1 min - 2 h, preferably in the range of 2 min - 1h, most preferably 5 - 30 min. Step (b) is preferably performed at about the same pressure as step (a) is performed, such as within 10 % of the pressure of step (a).

Step (b) is typically referred to as the washing step, although it can be envisioned within the context of the present invention that some torrefying reactions also occur during step (b). This is especially true when step (a) is performed as a pre-washing step, but can also be the case when step (a) is already the actual hydrothermal treatment step. Washing step (b) involves at least one washing step, which may be repeated one or more times. The last of such a sequence of washing steps is referred to as the final washing step, i.e. the last washing step before the biomass is discharged from the reactor. Step (b) may also involve more than one washing step, in which case the first washing step that occurs directly after step (a) is referred to as the first washing step. And before the final washing step occurs, one or more intermediate washing steps may occur. In case more than one washing step is performed, the washing liquid of each step should be preheated as defined above.

Thus, in a preferred embodiment, step (b) involves:
(b1) a first washing step wherein a first washing liquid is introduced into the reactor and the reactor is simultaneously and/or subsequently drained via a liquid outlet to obtain a liquor;
(b2) optionally one or more intermediate washing step wherein a further washing liquid is introduced into the reactor and simultaneously draining the reactor via a liquid outlet to obtain an intermediate washing effluent;
(b3) a final washing step wherein a final washing liquid is introduced into the reactor and the reactor is simultaneously drained via a liquid outlet to obtain a final washing effluent,

Preferably, step (b2) of the process according to the present embodiment involves 0 - 10 intermediate washing steps, more preferably 0 - 5 intermediate washing steps, most preferably 1 - 2 intermediate washing steps.

Each of the washing steps provides a liquid effluent. The liquid effluent of the first washing step is the liquid that is formed during step (a), and is referred to as the liquor. Each subsequent washing step affords a washing effluent, wherein the effluent of an intermediate washing step is referred to as an intermediate washing effluent and the effluent of the final washing steps referred to as the final washing effluent.

It is especially preferred that a washing effluent from an intermediate or final washing step is used as washing liquid in the first or intermediate washing liquid, hence performing a stepwise liquid flow which is counter-current to the solids flow. This is possible when effluents are stored in buffers or when two or more reactors perform the process according to the invention in parallel, but out of phase. To perform a non-buffered operation, the number of parallel reactors must be at least equal to the number of replicates in step (b), preferably at least the number of washing steps during step (b) plus 1. In a preferred embodiment, the further washing liquid used in any of steps (b2) is an effluent from a downstream washing step, in counter-current fashion.

All washing liquids employed in the process of the invention are aqueous, i.e. they comprises water, preferably water is the only liquid. The inventors found that only the last washing step, which in some embodiments is the only washing step, should be performed with clean water, while for any further upstream washing step, a washing effluent was found to be suitable, while maintaining optimal salt removal. Thus, the last washing liquid should thus be substantially free from the ions that are the objective of the removal, such as potassium and chloride. Thus, in one embodiment, the water used in step (b3) is substantially free from ions of alkali metals (Li, Na, K, etc.) and ions of halogenides, (CI, Br, etc.). In a preferred embodiment, fresh water is used as final washing liquid, such as rainwater, surface water, tap water or reverse osmosis water. The content of alkali metal ions and halogenides is sufficiently low in these water source that it can be used as last washing liquid to achieve the benefits of the invention, in particular the specifics of the obtained solid fuel. Preferably, the content of each of these ions individually is kept below 150 mg/L, most preferably below 90 mg/L. Notably, the relative small amount of last washing liquid is the only fresh water that is required in the process according to the invention, which is thus perfectly suitable to be performed in areas were fresh water is scarce. In fact, the amount of biomass that can be depleted from ions with this little amount of fresh water is unprecedented in the art.

### Step (c)

At the end of step (b), the reactor containing the biomass that is being treated is drained in step (c). Draining refers to the removal of the liquid phase (liquor) from the reactor, which may for example be done by opening a valve at the bottom or by decanting the reactor. During step (c), an effluent is obtained, but no further liquid is introduced into the reactor. The effluent from step (c) may thus be referred to as the final washing effluent. Thus, the draining of step (c) is without refill.

Normally, step (c) is conducted in two stages, a first stage wherein the liquid effluent is drained from the reactor, and a second stage where the treated biomass is removed from the reactor. The treated biomass may be obtained by opening the reactor, which releases the pressure therein. This pressure release may take any form. In one embodiment, the pressure is released instantaneously, and the biomass is subjected to a steam explosion step. Because of the pressure release, at least part of the remaining water in the reactor is evaporated to steam which causes rapid expansion of the biomass structure. Alternatively, the pressure is released gradually or controlled. A certain expansion of the biomass structure may occur, albeit to a lesser extent as when a steam explosion occurs. After the biomass is obtained from the reactor, it is advantageously further processed into solid fuels. Such further processing is known in the art and may include dewatering, drying, milling and pelletization. Dewatering can be accomplished in any manner known in the art, such as centrifugation, filtration and/or mechanically dewatering. Such separation of liquid and solid products may be enhanced, for example by pressing, squeezing or centrifuging the solid material using a porous mould to force out any remaining liquids inside the solid material. Typically, a centrifuge is used. After the draining of step (c), the moisture content of the solid material is typically in the range 50 - 90 %, such as 65 - 80 %, and could be lowered with about 50 % by the dewatering step. Depending on the total moisture content of the obtained solid material, further drying may be beneficial. Pelletization of the obtained solids, which may include milling, affords fuel pellets which are easy to store and transport. Drying and pelletizing the washed solids in the context of a hydrothermal treatment process is well-known in the art. In a preferred embodiment, the pelletizing occurs at a temperature in the range of 70 - 150 °C, preferably in the range of 100 - 140 °C. Pelletizing at such temperatures was found to improve the cohesion within the solid fuel pellet according to the invention.

In addition to the liquid effluent and the treated biomass, step (c) yields steam, which is advantageously used elsewhere in the process. Preferably, the steam obtained in step (c) is used in step (a) as a heat source or is condensed into a liquid. During the steam generation, light organic components like methanol and furfural may also be evaporated from the reactor and hence entrained with the steam flow. These components may be condensed together with the steam and are removed from the biomass to a larger degree than heavier organic components. Without being bound to a theory, the removal of light organic components from the biomass during step (c) is believed to lead to less odour evaporation from the biomass and thus also from the final solid fuel.

Step (c) may be performed at a starting temperature in the same temperature range as defined for step (a). Preferably, step (c) starts at a temperature at the higher end of this range, such as 200 - 250 °C, more preferably 210 - 230 °C. In a particular advantageous embodiment, step (c) is performed at a temperature which is at least 20 °C higher than the operational temperature of step (a). In a further particular advantageous embodiment, steps (a) and (b) are performed at more or less the same temperature, while step (c) is performed at a temperature which is at least 20 °C higher. Most preferably, the temperature at which step (c) is performed is 20 - 50 °C higher. During step (c), especially when the pressure is released from the reactor, the temperature typically drops. The evaporation of water reduces the temperature in the reactor. Typically, step (c) ends at a temperature around 100 °C.

### The obtained fuel

The present invention further concerns the solid fuel obtainable by, or obtained by, the process according to the invention. The solid fuel according to the invention typically has the form of pellets. The obtained solid fuels have excellent characteristics as fuel pellet, and can substitute coal in power generation in the same manner as white wood pellets can, yet they are prepared from less valuable biomass feedstock. The process according to the invention, in view of the washing step(s) at elevated temperature, removes higher amounts of lignin from the incoming biomass. At the same time, large amounts of ash, including chloride and potassium are removed from the biomass.

The solid fuel according to the invention is biomass-based. In other words, it originates from biomass. Preferred embodiments of the biomass are defined above, and include biomass with a high ash content and/or biomass that is fibrous in nature. In an especially preferred embodiment, the biomass is fibrous biomass, preferably selected from wood including hardwood and softwood, wood obtained from pruning or chopping trees, straw, bamboo, or mixtures thereof, preferably wherein the biomass is selected from SHR, EFB, FFB, mesocarp, coconut fibres, bamboo, wood including hardwood and softwood, wood obtained from pruning or chopping trees, most preferably wherein the biomass is selected from SHR, EFB, FFB, mesocarp, coconut fibres and bamboo.

In a preferred embodiment, the solid fuel is characterized by an ash content of 1 - 15 wt%, preferably 5 - 10 wt% (dry weight). Specifically, the chloride content is preferably in the range of 2 - 50 mg, more preferably 10 - 40 mg, per kg solid fuel. Likewise, the potassium content is preferably in the range of 50 - 500 mg, more preferably 200 - 400 mg, per kg solid fuel.

The total ash content of the solid fuel according to the invention may be reduced compared to the total ash content of the incoming biomass, but this is not always the case. In any case, the solid fuel according to the invention has a more beneficial ash composition compared to conventional solid fuel pellets obtained by torrefaction or steam explosion. In one embodiment, the more beneficial ash composition is defined by a reduction in the content of halogenides and alkali metals, typically represented by chloride and potassium, compared to their content in the incoming biomass. The skilled person is readily able to determine the chloride and potassium of the biomass and of the solid fuels, and to determine the level of reduction of these ions. Thus, the solid fuel preferably is 5 - 95 % lower than the ash content in the biomass the solid fuel originates from (based on dry weight). Specifically, it is preferred that the potassium content is 50 - 99.9 % lower, preferably 75 - 99 % lower, most preferably 90 - 98 % lower, than the potassium content in the biomass the solid fuel originates from (based on dry weight). Likewise, it is preferred that the chloride content is 50 - 99.9 % lower, preferably 90 - 99.5 % lower, most preferably 95 - 99 % lower, than the chloride content in the biomass the solid fuel originates from (based on dry weight). Other ashes which typically have a higher melting point, such as silicates, are removed from the biomass to a lesser extent. As the lower-melting ashes are removed to a greater extent, the solid fuel according to the invention has lower chance of fouling of the furnace.

The silicon content (determined as SiO₂) in total ash may increase from about 50 wt% to 60 - 95 wt%, preferably 75 - 90 wt%, in the treated biomass, which is indicative of a larger portion of the ash being formed by high-melting non-leachable salts such as silicates. The presence of those salts do not impede the suitability of the product as solid fuel, as they do not cause fouling of the furnace. On the other hand, the content of chlorine in total ash may reduce from about 3 wt% to as low as 0.001 - 1 wt%, preferably 0.01 - 0.1 wt% in the treated biomass. Likewise, the content of potassium in total ash may reduce from about 9 wt% to as low as 0.01 - 2 wt%, preferably 0.05 - 1 wt% in the treated biomass. The reduction of chlorine and potassium is indicative of low-melting readily soluble ashes in the solid fuel being greatly reduced. These ashes normally increase fouling of the furnace when the solid fuel is combusted.

Thus, in a preferred embodiment, the silicon content (determined as SiO₂) of the solid fuel according to the invention, based on total ash, is in the range of 60 - 95 wt%, preferably 75 - 90 wt%. In a further preferred embodiment, the chloride content of the solid fuel according to the invention, based on total ash, is in the range of 0.001 - 1 wt%, preferably 0.01 - 0.1 wt%; and the potassium content of the solid fuel according to the invention, based on total ash, is in the range of 0.01 - 2 wt%, preferably 0.05 - 1 wt%. These preferred ranges are typically linked to a total ash content in the solid fuel in the range of 1 - 15 wt%, preferably 5 - 10 wt%, based on dry weight.

The solid fuel has excellent characteristics. For example, it has a heat value in the range of 20 - 30 MJ, preferably in the range of 21 - 25 MJ per kg solid fuel. In view of the opened structure of the biomass and the degradation of hemicellulose, the solid fuels are more brittle and easier to grind compared to conventional pellets obtained by torrefaction. On the other hand, they are sufficiently hard to be able to handle them properly, e.g. during packaging and transport. The solid fuels according to the invention are generally harder than conventional fuel pellets obtained by torrefaction. Furthermore, the inventors found that the stickiness of the solid fuels upon heating in the range 150 - 300 °C was reduced compared to fuel pellets obtained by steam explosion. Additionally, the solid fuel according to the invention has a better water resistance than solid fuels obtained by conventional torrefaction and Torwash processes, meaning that they are less prone to disintegrate into pulp when they become wet. The solid fuel according to the invention retain their solid shape for a couple of days in a wet environment, while conventional solid fuel pellets obtained by dry torrefaction, Torwash or steam explosion typically disintegrate much quicker. The inventors further found that the solid fuel obtained by the process according to the invention exhibit a significantly reduced unpleasant odour. Especially step (c) of the process according to the invention ensures that sufficient light organic compounds are removed from the treated biomass that the smell that is normally caused by these light organic compounds is greatly reduced.

### The facility

The present invention further concerns a facility for the hydrothermal treatment of biomass, which is designed for performing the process according to the invention, in particular for the embodiment of the process according to the invention, wherein two or more reactors operate in parallel. Thus, the hydrothermal treatment facility according to the invention comprises in its most simple configuration (a) a first hydrothermal reactor and (b) a second hydrothermal reactor, wherein both reactors operate in parallel, but out of phase.

Both the first and the second hydrothermal reactor comprise:
(1) a reactor interior for containing an aqueous biomass mixture;
(2) an inlet for receiving the biomass;
(3) an inlet for receiving the treatment liquid or washing liquid;
(4) heating means;
(5) an outlet for discharging liquor or effluent;
(6) an outlet for discharging torrefied biomass;
(7) an outlet for discharging a process gas,

Herein, the outlet (a5) of reactor (a) is in fluid connection with inlet (b3) of reactor (b), to allow one or more washing effluents obtained from reactor (a) to be used as washing liquid in reactor (b). Hydrothermal reactors or hydrothermal treatment reactors are known in the art, and may also be referred to as Torwash reactors. The inventive merit of the treatment facility according to the invention is primarily based on the connection between the reactors in the reactor sequence that forms the facility.

All reactors in the sequence contain elements (1) - (7) as defined above. These elements are well-known to the skilled person in the art of hydrothermal treatment. Heating means (4) are suitable for operating the reactor at the operation temperature of step (a), as defined above. As described above, this heating means preferably takes the form of an inlet for introducing steam into the reactor. The steam may originate from the process itself, typically from step (c), and/or steam from an external source may be used. This inlet may be in fluid connection with the gas outlet of a reactor in the sequence, typically another reactor, such that steam that is liberated from the reactor, typically at the end of step (c) when the pressure is released from the reactor. The reactor is able to operate at different temperature in each step and in each phase of step (b), depending on the heat load that is introduced during the various stages of the process. Preferred temperatures are defined above for the process according to the invention.

In a preferred embodiment, the torrefied biomass that is discharged from outlet (6) is further treated in a dewatering device, a milling device and/or a pelletizing device. Preferably, the hydrothermal treatment facility according to the invention comprises at least one of a dewatering device, a milling device and a pelletizer, preferably at least a dewatering device and a pelletizer, most preferably a dewatering device, a milling device and a pelletizer. Dewatering devices, milling devices and pelletizers are known in the art of hydrothermal treatment facilities and in the context of solid fuel manufacture. Each reactor of the treatment facility may be connected via outlet (6) to a separate dewatering device, a milling device and/or a pelletizing device, or the outlets (6) of the reactors may be connected together to a single dewatering device, a milling device and/or a pelletizing device. Thus, in a preferred embodiment, the hydrothermal treatment facility according to the invention comprises at least one dewatering device. Dewatering devices are known in the art of hydrothermal treatment facilities and in the context of solid fuel manufacture and any dewatering device is suitable in the context of the present invention. Preferred dewatering devices include a centrifuge, a filter press (e.g. a belt filter press), a dewatering screw (screw press or extruder), a drum thickener and a gravity belt. Thus, in a preferred embodiment, the hydrothermal treatment facility according to the invention comprises at least one milling device. Milling devices are known in the art of hydrothermal treatment facilities and in the context of solid fuel manufacture and any milling device is suitable in the context of the present invention. The milling device may also be referred to as a mill capable of milling torrefied and optionally dewatered biomass. Thus, in a preferred embodiment, the hydrothermal treatment facility according to the invention comprises at least one pelletizer. Pelletizers are known in the art of hydrothermal treatment facilities and in the context of solid fuel manufacture and any pelletizer is suitable in the context of the present invention. The connection between outlet (6) and the downstream treatment apparatuses described here is a connection for transporting solids, which typically takes the form of a conveyor belt.

Each of the reactors in the hydrothermal treatment facility according to the invention is a reactor for the hydrothermal treatment. Within the reactor interior (1) both the torrefaction reactions and the washing of the biomass takes place. Thus, the hydrothermal treatment facility normally does not contain a hydrothermal treatment reactor or torrefaction reactor upstream of the reactors defined above. The at least two reactors of the facility form a reactor sequence, wherein reactor (a) is the first reactor in the sequence, and reactor (b) is the second reactor in the sequence. The number of reactors in the sequence is not particularly limited, but from a practical point of view, there would typically be 2 - 12 reactors in sequence, preferably 3 - 5 reactors. Normally, the amount of reactors in the sequence is within one of the amount of washing steps of the process. Thus, when there are three washing steps, the amount of reactors is preferably in the range of 2 - 4. Most preferably, the amount of reactors in the sequence equal the amount of washing steps of the process. The last reactor in the sequence is referred to as the last reactor. The second reactor may be the last reactor. The total number of reactors in the facility typically equals the amount of washing steps (b) that are performed in the process according to the invention, plus one. Thus in case step (b) would involve one first washing step, one intermediate washing step and one final washing step, the facility advantageously contains four hydrothermal reactors.

Outlet (5) of each reactor is in fluid connection with inlet (3) of the next reactor in the sequence. Herein, "next reactor" refers to the reactor which is the first one downstream of the present reactor, when the liquid stream is followed overtime. Herein, the first reactor qualifies as the next reactor of the last reactor in the sequence, such that a circular arrangement of the reactors is obtained. Thus, outlet (5) of the last reactor is in fluid connection with inlet (3) of the first reactor, such that also the first reactor can be fed with a washing effluent from another reactor. In case the reactor sequence contains two reactors, outlet (b5) of reactor (b) is in fluid connection with inlet (a3) of reactor (a).

Typically, for each reactor outlet (5) is also in fluid connection with inlet (3) of the same reactor, to allow the use of one of the washing effluents to be used as treatment liquid in the same reactor. As such, outlet (5) is equipped with a valve that allows directing the effluent that is drained from the reactor to be led to either inlet (3) of the same reactor, or inlet (3) of the next reactor in the sequence. Likewise, inlet (3) is equipped with a valve that allows introduction of the effluent that is obtained from either outlet (5) of the same reactor, or outlet (5) of the previous reactor in the sequence. Alternatively, outlet (5) or inlet (3) or both take the form of two separate outlets or inlets, one which is fluid connection with the same reactor and one which is in fluid connection with another (previous or next) reactor in the sequence. Preferably, each outlet is configured such that the liquor may be discharged from the facility as (by-)product and used as deemed fit, as defined above. This configuration may take the form of a valve or as separate outlets from the reactors. The liquors that are discharged from all reactors in the facility may be combined before further treated. Thus, the fluid connections from outlet (5) wherein the effluent (liquor) is discharged from the facility may be combined in a single effluent stream. After each step in the process, fully circulated liquid effluent is discharged. In case of more caroussels of reators operate in parallel, these final liquid effluents may be combined and discharged into a single effluent stream.

In an especially preferred embodiment, outlet (5) of each reactor is in fluid connection with a lignin collection vessel, preferably a single lignin collection vessel for all reactors in the sequence. The fluid connection of outlet (5) to each of inlet (3) of the same reactor, inlet (3) of the next reactor and the lignin collection vessel is controlled by one or more valves, opening the desired connection at the desired time, as dictated by the process defined above. The fluid connection to the lignin collection vessel is configured to keep it at an elevated temperature to avoid precipitation of lignin, as defined above. Preferably, this fluid connection is kept as short as possible.

### Example

In this experiment, empty fruit bunches (EFB) were treated according to the invention. The EFB had a moisture content of 8.9% (as received), an ash content of 7.1 wt% (dry base) a CI content of 2200 mg/kg (dry base) and a K content of 6300 mg/kg (dry base). A batch of EFB and treatment water was prepared in a 2L autoclave, composed of 80.6 g EFB and 1333 g water so that all EFB was immersed in the treatment water. The autoclave was closed and heated to 215 °C and the mixture was treated for 30 minutes while continuously stirred. This first step represented the hydrothermal treatment step (a).

At the end of the hydrothermal treatment, 1172 g of liquor was drained from the bottom of the autoclave and cooled at the outlet to 80-90 °C to avoid steam. The temperature in the autoclave was allowed to drop to 180 °C. An amount of 1039 g of demineralized water was added at a rate of 40 ml/min while maintaining the temperature at 180°C. The mixture of EFB and water was continuously stirred for 15 minutes. This step represented washing step (b). At the end of the washing step, 1077 g of the washing liquid (effluent) was drained from the bottom of the autoclave and cooled to 100 °C. Finally, an amount of 129 g washed torrefied EFB was recovered from the autoclave with a moisture content of 73%, so 27 g dry matter. The mass balance of this process was calculated as given in Table 1.

The torrefied EFB was pressed into a suitable fuel pellet having a density of 1075 kg/m³ at a temperature of 120 °C, representative of a pelletizing apparatus.

**Table 1: Mass balance**

| | Total weight (g) | Liquid (g) | Solid (g) |
|---|---|---|---|
| EFB (in) | 80.6 | 7.2 | 73.4 |
| Treatment liquid (in) | 1333 | 1333 | 0 |
| Torrefied/drained EFB (intermediate) | ± 241.6 | | |
| Liqour (out) | 1172 | | |
| Washed/pressed material (out) | 129 | 81.3 | 34.9 |
| Fresh water (in) | 1039 | 1039 | 0 |
| Effluent (out) | 1077 | | |

The overall solids yield was about 48%: 73.4 g of the inputted solids was recovered as 34.9 g output solids in the pressed product. The overall mass balance gives an input of 2452 g and an output of 2378 g, which is 97% or a loss of 74 g. Most mass loss can be attributed to evaporation of hot water that was drained. In addition, some mass loss has occurred due to the formation of CO₂ in the hydrothermal treatment step (about 10 g) and due to deposition of lignin in the filter at the bottom drain and the pipes (about 5-10 gram).

Samples of feedstock, liquid effluents and the solid pressed product were analysed for chlorine (CI) and potassium (K) content. The composition of the original EFB and the washed torrefied pressed product of EFB are listed in table 2. Note that the moisture contents are different than described here above as the samples were further dried before analysis could be performed.

**Table 2: composition of starting materials EFB, product streams and result product.**

| | Liquor | washing effluent | EFB (in) | Pressed product |
|---|---|---|---|---|
| Ash (wt%) | | | 7.1 | 7.0 |
| CI (mg/kg) | 6900 | 31 | 2200 | 34 |
| K (mg/kg) | | | 6300 | 300 |
| Si (as SiO₂) (wt%) | | | 3.6 | 6.0 |

The chloride content of the material dropped from 2200 to 34 mg/kg (dry basis). When taking the solids yield into account, 0.7% of the chloride remained in the product. Also, the amounts of other unwanted elements are lowered substantially. For example, untreated EFB contained 6300 mg/kg potassium (K), which decreased to an amount of only 300 mg/kg potassium in the pressed product. In addition, the heat value of EFB in the pressed product increased from 19.5 to 21.9 MJ/kg, which represent the amount of heat that is released during combustion of a specified amount of fuel. The pressed product shows all characteristics of an excellent solid fuel. The ash content remained the same. However, the content of leachable and readily dissolvable salts was greatly reduced, and the remaining ash-forming components are dominated by silicon oxide.

The overall conclusion is that the process according to the invention results in a solid product that is as attractive solid fuel with characteristics equal to clean wood pellet. These biofuel pellets can be used to substitute coal in power generation in the same manner as white wood pellets or black pellets can. In addition, because the removal of liquor took place at higher temperatures and under pressure, lignin could be removed from the biomass. Lignin is a highly cross-linked phenolic polymer which acts as a physical barrier which can block hydrolysis of the carbohydrates to produce bio-chemical products and thus its removal from biomass allows the resulted bio-fuel to be more potent.

## Claims

1. A process for the treatment of biomass, comprising:
(a) subjecting biomass to hydrothermal treatment in a hydrothermal reactor by immersing the biomass in a treatment liquid, wherein an effluent drained from step (b) or (c) is used as treatment liquid;
(b) draining the liquid from the reactorvia a liquid outlet to obtain a liquor and simultaneously or subsequently introducing anotherwashing liquid into the reactor, wherein the washing liquid is pre-heated to a temperature 30 °C below operational temperature of step (a) or higher before being introduced into the reactor,
(c) draining the reactor to obtain washed hydrothermally treated biomass and an effluent, wherein at least one of step (a) and (b) is performed at a temperature in the range of 100 - 250 °C.

2. The process according to claim 1, wherein step (b) involves:
(b1) a first washing step wherein a first washing liquid is introduced into the reactor and the reactor is simultaneously and/or subsequently drained via a liquid outlet to obtain a liquor;
(b2) optionally one or more intermediate washing step wherein a further washing liquid is introduced into the reactor and simultaneously draining the reactor via a liquid outlet to obtain an intermediate washing effluent;
(b3) a final washing step wherein a final washing liquid is introduced into the reactor and the reactor is simultaneously drained via a liquid outlet to obtain a final washing effluent, wherein each washing liquid is pre-heated to the operational temperature of step (a) before being introduced into the reactor.

3. The process according to claim 2, wherein step (b2) involves 0 - 10 intermediate washing steps.

4. The process according to claim 2 or 3, which is performed in a hydrothermal treatment plant wherein at least two hydrothermal reactors perform the process in parallel, and wherein one or more of the intermediate washing effluents and final washing effluent from a first reactor is used as washing liquid in the first washing step or one or more of the intermediate washing steps in a second reactor, preferably wherein the temperature of the washing effluent is kept above 150 °C.

5. The process according to any one of the preceding claims, wherein the effluent drained from step (c) is used as treatment liquid in step (a).

6. The process according to any one of the preceding claims, wherein the washed biomass after drainage in step (c) is subjected to a steam explosion or controlled pressure release by lowering the pressure.

7. The process according to any one of the previous claims, wherein temperature of the effluent from step (c), typically in the form of steam, is used to heat the treatment liquid prior to step (a), preferably in a heat exchanger or by direct injection into the treatment liquid.

8. The process according to any one of the preceding claims, wherein the liquid to solid (L/S) ratio during the treatment of step (a) is in the range of 2 - 25, preferably in the range of 15 - 20.

9. The process according to any one of the preceding claims, wherein the biomass comprises fibrous lignocellulosic biomass of woody or herbaceous origin, namely wood including hardwood, softwood and wood obtained from pruning or chopping trees, straw, bamboo, or mixtures thereof, preferably wherein the biomass is fibrous biomass selected from sugarcane harvest residues (SHR), empty fruit bunches (EFB), discarded fresh fruit bunches (FFB), mesocarp, coconut fibres and fruit peels.

10. The process according the any one of the preceding claims, further comprising processing of the washed hydrothermally treated biomass into solid fuel pellets, preferably by one or more dewatering, drying and pelletizing.

11. The process according to any one of the preceding claims, wherein the liquor obtained in step (a) is used to preheat the washing liquid in step (b), preferably in step (b3), preferably in a heat exchanger, and/or wherein the liquor obtained in step (a) is kept at a temperature above 140 °C until it is cooled to below 100 °C in a lignin collection vessel, wherein lignin precipitates from the liquor.

12. Solid biomass-derived fuel obtainable by the process according to any one of the preceding claims.

13. Liquor obtainable by the process according to any one of the preceding claims, in particular by step (b1).

14. A facility for the hydrothermal treatment of biomass, comprising a reactor sequence of at least two hydrothermal reactors, (a) a first hydrothermal reactor and (b) a second hydrothermal reactor, wherein all reactors operate in parallel and comprise:
(1) a reactor interior for containing an aqueous biomass mixture;
(2) an inlet for receiving the biomass;
(3) an inlet for receiving the treatment liquid or washing liquid;
(4) heating means, which preferably take the form of an inlet for receiving steam;
(5) an outlet for discharging liquor or effluent;
(6) an outlet for discharging torrefied biomass;
(7) an outlet for discharging a process gas,
wherein outlet (5) of reactor (a) is in fluid connection with inlet (3) of reactor (b), and wherein outlet (5) of the last reactor of the sequence is in fluid connection with inlet (3) of reactor (a).

15. The facility according to claim 14, wherein outlet (5) is equipped with a valve capable of closing the fluid connection with inlet (3) and opening a fluid connection with a lignin collection vessel.
